# EUROPÄISCHE PATENTSCHRIFT

(11) **EP 2 339 913 B1**
(45) Veröffentlichungstag und Bekanntmachung des Hinweises auf die Patenterteilung: **14.11.2012**
(21) Anmeldenummer: 09772184.9
(22) Anmeldetag: 03.07.2009
(51) Int. Cl.: A01J 5/08

(54) **VORRICHTUNG UND VERFAHREN ZUM MONTIEREN EINES FÜR LEBENSMITTEL GEEIGNETEN SCHLAUCHSTÜCKES**
DEVICE AND METHOD FOR ASSEMBLING A TUBE SECTION SUITABLE FOR FOOD
DISPOSITIF ET PROCÉDÉ DE MONTAGE D'UN MORCEAU DE TUYAU DESTINÉ À DES DENRÉES ALIMENTAIRES

(30) Priorität: 03.07.2008 DE 102008031510
(43) Veröffentlichungstag der Anmeldung: 06.07.2011
(73) Patentinhaber: Maier, Jakob, 86842 Türkheim (DE); Hatzack, Wilfried, 86842 Türkheim (DE)
(72) Erfinder: Maier, Jakob, 86842 Türkheim (DE); Hatzack, Wilfried, 86842 Türkheim (DE)
(74) Vertreter: Grünecker, Kinkeldey, Stockmair & Schwanhäusser
(86) Internationale Anmeldenummer: PCT/EP2009/004825
(87) Internationale Veröffentlichungsnummer: WO 2010/000484

(56) Entgegenhaltungen:
- WO-A-03/069981
- WO-A-2008/041935
- US-A- 1 701 072
- US-A1- 2007 039 551
- US-B1- 6 920 840

## Beschreibung

Die vorliegende Erfindung betrifft im Allgemeinen das Verbinden von flexiblen Leitungen, die für den Transport von Lebensmittel geeignet sind, mit entsprechenden Anschlussbereichen, etwa das Verbinden von Schlauchabschnitten, die einen Melkbecher mit einer Milchsammeleinheit verbinden.

Im Bereich der Verarbeitung von Flüssigkeiten im Nahrungsmittelbereich werden häufig Fluidleitungen eingesetzt, die als flexible Schläuche vorgesehen werden, die eine geeignete Fluidverbindung zwischen entsprechenden Anschlussbereichen herstellen, wobei zumindest eine der Anschlussstellen an einem mobilen Endgerät befestigt ist. Abhängig vom Grade der Belastung der flexiblen Fluidleitung im Hinblick auf Verbiegungen und dergleichen, muss durch eine entsprechende Wartung sichergestellt sein, dass die Fluidleitung die erforderliche mechanische Integrität beibehält und zudem auch die hygienischen Anforderungen während der gesamten Betriebszeit erfüllt. Beispielsweise dürfen auch bei häufig auftretender Belastung durch Biegen und Abknicken keine unzulässigen Materialstoffe an die Innenwand der flexiblen Fluidleitung gelangen und es muss auch sichergestellt sein, dass keine Verunreinigung der Flüssigkeit auftritt, die etwa durch eine unzureichende Reinigung kritischer Bereiche der flexiblen Fluidleitung in Folge von Rissen und dergleichen hervorgerufen werden kann.

Ein wichtiger Anwendungsfall in dieser Hinsicht ist in der Agrartechnik bei der Verarbeitung von Milch gegeben. Ein entscheidender Schritt in der gesamten Kette der Milchverarbeitung ist der Melkvorgang, bei welchem in der Regel durch einen automatisierten oder semi-automatisierten Ablauf die Euter der Tiere mit Melkbechern verbunden werden, in denen dann durch Erzeugen eines Vakuums in stetiger oder pulsierender Weise die Milch abgesaugt wird. Der Melkvorgang ist an sich ein sehr komplexer Vorgang, da dabei zunächst strenge hygienische Auflagen zu beachten sind, um zum einen eine Kontaminierung der ermolkenen Milch möglichst gering zu halten, und zum anderen ist auch die Eutergesundheit der einzelnen Tiere zu erhalten. Aufgrund der ausgeprägten Konkurrenzsituation auf dem Agrarsektor ist ein dauerhafter hoher Milchertrag in einem Betrieb von besonderer Bedeutung, der sich langfristig nur dadurch erreichen lässt, dass der Vorgang des Melkens mit gleichbleibender hoher Qualität ausgeführt wird. Andererseits zwingen die ökonomischen Gegebenheiten die Milchhersteller dazu, einen möglichst hohen Grad an Automatisierung vorzusehen, so dass die erforderlichen Personalkosten möglichst gering bleiben. Zu diesem Zweck werden entweder im wesentlichen vollautomatisierte Melkeinrichtungen, sogenannte Melkroboter eingesetzt, die unbeaufsichtigt das Melken einzelner Tiere ermöglichen, so dass idealer Weise die Tiere den Zeitpunkt des Melkens selbst bestimmen können, ohne dass das Zutun eines Bedieners erforderlich ist. Bei diesen vollautomatisierten Melkeinrichtungen sind im wesentlichen alle einzelnen Schritte automatisiert, d.h., das Reinigen der Zitzen, das Anlegen der Melkbecher an die gereinigten Zitzen, das Stimulieren und Melken, sowie das Abnehmen der Melkbecher. In vielen anderen Agrarbetrieben wird ein etwas geringerer Grad an Automatisierung eingesetzt, um zum einen die hohen Anschaffungskosten für die vollautomatisierten Melkeinrichtungen zu vermeiden und andererseits ein höheres Maß an die Qualität des Melkvorgangs, beispielsweise im Hinblick auf das Reinigen, Stimulieren, etc. zu ermöglichen, da zumindest während der Anfangsphase des Melkvorgangs Bedienpersonal einen direkten Kontakt und damit Zugriff zu dem zu melkenden Tier besitzt.

Unabhängig davon, ob vollautomatisierte oder halbautomatisierte Melkeinrichtungen Verwendung finden, ist die ermolkene Milch von dem Euter des Tieres zu einer entsprechenden Sammeleinrichtung zu leiten, wobei flexible Milchschläuche zu verwenden sind. Einen weiteren wichtigen Bestandteil der gesamten Fluidkette vom Euter des Tieres bis zur Milchsammeleinheit repräsentiert der Zitzengummi, der das Innere des Melkbechers auskleidet und somit in direktem Kontakt mit der Zitze während des gesamten Melkvorgangs ist. Somit stellt der Zitzengummi die "Schnittstelle" zwischen Tier und Maschine dar und soll möglichst optimale Eigenschaften im Hinblick auf den Kontakt mit dem Tiereuter und auch im Hinblick auf die mechanischen und chemischen Eigenschaften erfüllen, so dass ein zuverlässiges Funktionieren der automatischen Melkanlage sowie ein Erfüllen der hygienischen Auflagen erreicht wird.

Bei einer weitverbreiteten Melktechnik wird beispielsweise der Zitzengummi abwechselnd von außen mit Unterdruck und atmosphärischem Druck beaufschlagt, so dass ein Pulsieren des Absaugens der Milch erreicht wird, wodurch zu einem gewissen Maße der natürliche Saugvorgang des Kalbes nachgeahmt wird. Aufgrund dieser hohen Belastung im Hinblick auf eine kontinuierliche Verformung des Zitzengummis sowie auch im Hinblick auf eine gute Verträglichkeit beim Kontakt mit der Zitze des Tieres werden zum Teil sehr aufwendige Materialien in Form von Silikonmischungen angewendet, um insgesamt eine hohe Betriebsdauer der Zitzengummis zu ermöglichen. Um jedoch eine konstant hohe Qualität im Melkvorgang beizubehalten, ist dennoch ein regelmäßiger Austausch der Zitzengummis aufgrund von Materialermüdung und Beschädigungen beim Betrieb erforderlich, wobei dies in größeren Betrieben, in denen eine Vielzahl von Melkgeschirren Verwendung finden, ein zum Teil sehr zeitaufwendiger Vorgang ist. Insbesondere bei vollautomatisierten Melkeinrichtungen wird der Austausch von Zitzengummis und Milchschläuchen in der Regel von speziell geschultem Personal während der routinemäßigen Wartung ausgeführt, so dass hohe Wartungskosten und eine relativ große Ausfallzeit für die jeweiligen Anlagen beim Austausch der Zitzengummis auftreten kann.

Häufig werden zwei verschiedene Arten von Zitzengummis angewendet, wobei bei der einen Zitzengummiart ein daran angeschlossenes flexibles Schlauchstück als integrale Einheit mit dem Zitzengummi vorgesehen wird, die die Verbindung vom Melkbecher zum Milchsammelstück herstellt. In anderen Arten, wie sie beispielsweise vorwiegend in vollautomatisierten Melkeinrichtungen Anwendung finden, wird der Melkbecher mit einem entsprechenden Zitzengummi versehen, der nur kurz aus dem Melkbecher herausragt, wobei der Milchabfluss aus dem Zitzengummi des Melkbechers durch andere mit dem Melkbecher verbundene Leitungen erfolgt. Beispielsweise wird bei einem derartigen Zitzengummi ohne integralen Milchschlauch nach dem Herausnehmen des verschlissenen Zitzengummis der neue Zitzengummi eingeführt und der untere Bereich des Zitzengummis, der eine der Öffnung des Melkbechers entsprechende Nut an der Außenseite aufweist unter Benutzung einer Zange eingerastet. In anderen Vorgehensweisen wird ein Zitzengummi mit integralen Milchschlauch manuell durch die Öffnung gezogen und anschließend entsprechend gekürzt. Bei beiden Verfahren treten jedoch erhebliche Nachteile auf, etwa im Hinblick auf Materialverschwendung, da ein Zitzengummi mit integralem Milchschlauch verwendet wird, der dann abgeschnitten wird, so dass das abgeschnittene Ende nicht mehr weiter verwendbar ist, während bei dem ersten Verfahren die Gefahr besteht, dass eine Schädigung des Zitzengummis am unteren Bereich auftritt, insbesondere bei besonders hochwertigen Materialien in Form von Silikonzitzengummis. Bei einer entsprechenden Schädigung ist jedoch gegebenenfalls die mechanische Belastbarkeit des neuen Zitzengummis deutlich verringert und/oder es ergeben sich auch hygienische Nachteile, da bereits in neu montierten Zitzengummis Defekte vorhanden sein können, die eine Reinigung kritischer Stellen erschweren oder das Eindringen von unerwünschten Stoffen in die Milch ermöglichen.

Andererseits werden bei der Montage von Zitzengummis mit integralem kurzen Milchschlauch lange Haken verwendet, die in Zitzengummis eingefädelt werden, um den hinteren Abschnitt des kurzen Milchschlauchs in die Anschlussöffnung des Milchsammelstücks einzuführen. Auch dieser Vorgang ist mit einem erheblichen Risiko der Schädigung des neuen Zitzengummis bzw. des integralen kurzen Milchschlauches behaftet, wobei auch insgesamt der Vorgang der Montage relativ langwierig ist und damit die zuvor dargestellten ökonomischen Nachteile nach sich ziehen kann.

Das Dokument WO 2008/041935 A zeigt einen Zitzengummi, der an seinem unteren Ende einen Griff aufweist. Durch den Griff kann der untere Teil des Zitzengummis durch eine Öffnung am Boden eines Melkbechers gezogen werden.

Aus dem Dokument US 2007/039551 A1 ist eine Vorrichtung zum Anbringen eines Zitzengummis an einem Melkbecher bekannt. Die Vorrichtung weist eine Klemme auf, durch die ein Ende des Zitzengummis eingespannt wird und mittels eines pneumatischen oder hydraulischen Zylinders durch den Melkbecher gezogen wird, so dass der Zitzengummi den Melkbecher auskleidet.

Angesichts der zuvor beschriebenen Situation ist es eine Aufgabe der vorliegenden Erfindung, Mittel bereit zu stellen, um das Montieren von für Nahrungsmittel geeignete Schlauchstücke, und insbesondere Zitzengummis, wesentlich effizienter und schneller zu gestalten, und dabei die Gefahr der Schädigung des Zitzengummis zu reduzieren.

Gemäß einem Aspekt der vorliegenden Erfindung wird diese Aufgabe gelöst durch eine Montageeinrichtung zum Einsetzen eines verformbaren zur Leitung von Nahrungsmitteln geeigneten Schlauchstückes in eine Öffnung, wobei die Einrichtung eine dem Umfang des Schlauchstücks zumindest teilweise umschließende Halteeinrichtung aufweist, die ausgebildet ist, einen dem Schlauchstück entsprechenden ursprünglichen Durchmesser zumindest beim Einführen des Schlauchstücks in die Öffnung in zumindest einer radialen Richtung zu reduzieren. Des weiteren weist die Montageeinrichtung einen Griff auf, der mit der Halteeinrichtung verbunden ist.

Aufgrund dieser Ausbildung der Montageeinrichtung wird das Schlauchstück in geeigneter Weise verformt, so dass sich eine Verringerung des ursprünglichen Durchmessers ergibt, so dass damit ein Einführen in die Öffnung, die eine Anschlussöffnung einer Milchsammeleinheit und dergleichen sein kann, erheblich erleichtert wird. Es ergibt sich eine sehr kontrollierte Verformung des Schlauchstücks, die auch in einem hohen Maße reproduzierbar ist und damit für ein gleichmäßiges Montieren einer Vielzahl von Schlauchstücken geeignet ist. Vorteilhafter Weise ist die Halteeinrichtung ausgebildet, einen Endbereich eines Zitzengummis zumindest teilweise zu umschließen. Damit können aber auch sehr hochwertige und gegebenenfalls empfindlichere Zitzengummis, beispielsweise in Form von Silikonzitzengummis mit höherer Geschwindigkeit bei geringerer Gefahr einer Schädigung montiert werden.

In einer vorteilhaften Ausführungsform weist die Halteeinrichtung zwei oder mehr Greifbacken auf, die somit in geeigneter Weise mit dem Ende des Schlauchstücks in Eingriff gebracht werden können, um damit die gewünschte Verringerung des Durchmessers hervorzurufen, so dass ein einfacheres Einführen in die vorgegebene Öffnung möglich ist.

In einer vorteilhaften Ausführungsform weisen die zwei oder mehr Greifbacken jeweils einen Eingriffsabschnitt zum Eingreifen in eine Kerbe des Schlauchstücks auf, so dass eine geeignete mechanische Fixierung des Schlauchstücks an der Montageeinrichtung erfolgen kann. So kann ein ausreichend fester mechanischer Kontakt zwischen dem Schlauchstück und der Montageeinrichtung hergestellt werden, ohne dass weitere Mittel erforderlich sind.

In einer weiteren vorteilhaften Ausführungsform ist eine Arretiereinrichtung vorgesehen, die ausgebildet ist, die Greifbacken in einer Betriebsstellung zum Halten des Schlauchstücks in Position zu halten.

Hierbei ist eine Betriebsstellung als eine Stellung der Greifbacken bzw. Halteeinrichtung zu verstehen, in der die Reduzierung des Durchmessers zumindest in einer radialen Richtung so erfolgt ist, dass ein Einführen oder Einfädeln in die Öffnung möglich ist. Auf diese Weise kann die Arretiereinrichtung somit einen hohen Grad an Reproduzierbarkeit ermöglichen, da eine reproduzierbare Festlegung der gewünschten radialen Abmessung der Halteeinrichtung möglich ist. Zu diesem Zweck können die radial beweglichen Greifbacken an einer gewünschten Stelle fixiert werden oder die Arretiereinrichtung ist so ausgebildet, dass, beispielsweise mittels eines Gewindeganges eine kontinuierliche Anpassung der radialen Abmessung erreicht werden kann, die aber dann somit in hohem Maße reproduzierbar ist und damit das Vorsehen einer Vielzahl von Betriebsstellungen ermöglicht, um damit eine etwaige Toleranz oder Unterschiede in den Schlauchstücken und den Öffnungen bei verschiedenen Montagevorgängen auszugleichen. Auch kann auf diese Weise eine geeignete Anpassung an unterschiedliche Größen für Öffnungen und Schlauchstücke erfolgen, ohne dass konzeptionell Änderungen an der Montageeinrichtung erforderlich sind.

In einer weiteren vorteilhaften Ausführungsform weist die Montageeinrichtung eine Justiereinrichtung auf, um die Montageeinrichtung durch eine Öffnung eines Melkbechers zu führen. Mittels der Justiereinrichtung wird somit ein Verdrehen des Schlauchstücks beispielsweise in Form des Zitzengummis in Bezug auf den Melkbecher weitestgehend verhindert, so dass auch sehr sensible Materialien ohne Torsionsverspannung in den Melkbecher eingeführt werden können und die Funktion des Zitzengummis im Melkbecher beim Melkvorgang, beispielsweise beim pulsierenden Betrieb mit hoher Zuverlässigkeit gewährleistet werden kann.

In einer weiteren vorteilhaften Ausführungsform ist die Halteeinrichtung ausgebildet, das Schlauchstück teilweise zu umfassen und zu verformen, um dessen Durchmesser in der zumindest einen radialen Richtung zu reduzieren und in einer dazu senkrechten radialen Richtung zu vergrößern. Mit dieser Ausbildung der Halteeinrichtung kann mit geringerem Kraftaufwand eine Verringerung des Durchmessers in einer radialen Richtung erreicht werden, so dass ein Einsetzen des verformten Schlauchstücks in die Öffnung effizient möglich ist, wobei der in der dazu senkrechten radialen Richtung größere Durchmesser durch ein entsprechendes schräges Einführen in die Öffnung sich nicht nachteilig auswirkt.

In einer weiteren vorteilhaften Ausführungsform weist die Halteeinrichtung gemäß der zuvor dargestellten Ausführungsform zwei Greifbacken auf, die in einer Montagestellung fixierbar sind und ein Ringsegment bilden mit einer Aufnahme bzw. Eintrittsöffnung, die ein radiales Einführen des Schlauchstücks in das Ringsegment ermöglicht. Somit kann die Halteeinrichtung im wesentlichen senkrecht zur Längsachse des Schlauchstücks an diesem angesetzt werden und eine geeignete Verformung des Durchmessers hervorrufen.

In diesem Zusammenhang sollte beachtet werden, dass der Begriff Durchmesser eine Abmessung des Schlauchstücks im Querschnitt entlang einer gewissen radialen Richtung bezeichnet, die durch den aktuellen Mittelpunkt des Querschnitts verläuft, unabhängig davon, ob dieser Wert für unterschiedliche radiale Richtungen gleich ist oder nicht. Beispielsweise kann ein Schlauchstück mit anfänglich kreisrundem Querschnitt so verformt werden, dass es einen ovalen Querschnitt aufweist, so dass sich für Abmessungen, die durch den Mittelpunkt des ovalen Querschnitts verlaufen, je nach radialer Richtung unterschiedliche Werte erhalten werden. Dabei werden alle diese Abmessungen als "Durchmesser" entsprechend der jeweiligen radialen Richtung bezeichnet.

In einer weiteren vorteilhaften Ausführungsform sind die beiden Greifbacken verstellbar, so dass ein Durchmesser des Ringsegments einstellbar ist. Auf dieser Weise lässt sich die Montageeinrichtung an unterschiedliche Durchmesser der Öffnung anpassen und gegebenenfalls auch Fertigungstoleranzen ausgleichen.

In einer weiteren vorteilhaften Ausführungsform weist die Halteeinrichtung zwei Greifbacken auf, die starr mit dem Griff verbunden sind und ein Ringsegment bilden mit einer Aufnahmeöffnung, die ein radiales Einführen des Schlauchstücks in das Ringsegment ermöglicht. Mittels dieser Gestaltungsweise kann die Montageeinrichtung konstruktiv sehr einfach gehalten werden, so dass das Ringsegment bereits bei der Herstellung der Montageeinrichtung oder zumindest eines Teils davon in genauer Weise auf die Abmessungen der Öffnung, beispielsweise einer Öffnung eines Milchsammelstücks, und dergleichen, eingestellt werden kann.

In einer weiteren vorteilhaften Ausführungsform weist die Montageeinrichtung einen Führungssteg auf, der zumindest entlang eines Teils des Umfangs des Ringsegments ausgebildet ist. Der Führungssteg kann vorteilhafter Weise so ausgebildet sein, dass er dem Innendurchmesser der Öffnung entspricht, so dass ein präzises Einsetzen der Montageinrichtung in die Öffnung gewährleistet ist und damit auch ein hohes Maß an Präzision beim Einsetzen des Schlauchstücks, beispielsweise eines empfindlichen Zitzengummis gewährleistet ist, ohne dass eine Schädigung erfolgt.

In einer vorteilhaften Ausführungsform ist ferner ein bewegbares Schiebeelement vorgesehen, dass bei Betätigung mit dem von der Halteeinrichtung gehaltenen Schlauchstück in Kontakt gebracht werden kann. Auf diese Weise kann nach erfolgtem Einsetzen des Schlauchstücks in die Öffnung dieses effizient kurzzeitig in Position gehalten werden, wenn die Montageeinrichtung von dem Schlauchstück abzuziehen ist.

Eine weitere vorteilhafte Ausführungsform ist gemäß Anspruch 13 definiert.

Gemäß einem weiteren Aspekt der vorliegenden Erfindung wird die eingangs genannte Aufgabe durch eine Montageeinrichtung zum Einsetzen eines Milchschlauchstücks in eine Anschlussöffnung einer Milchsammeleinrichtung gelöst. Dazu weist die Montageeinrichtung eine fest eingestellte oder einstellbare Montageöffnung auf, die ausgebildet ist, das Milchschlauchstück teilweise zu umfassen und dessen Durchmesser in einer radialen Richtung zu reduzieren. Mittels dieser Montageeinrichtung können die eingangs erwähnten Nachteile, d.h. die Schädigung des neu einzusetzenden Milchschlauchstücks bzw. ein aufwendig zeitintensiver Montagevorgang weitestgehend behoben werden.

In einer vorteilhaften Ausführungsform wird die Montageöffnung durch ein Ringsegment mit einer Aufnahmeöffnung gebildet, durch des Milchschlauchstück radial in die Montageöffnung einführbar ist. Dadurch kann, wie dies bereits zuvor erläutert ist, eine effiziente Verformung des ursprünglichen Durchmessers des Milchschlauchstücks mit geringem Kraftaufwand bewirkt werden, wobei die radiale Einwirkung der Montageeinrichtung auf den Milchschlauch auch eine gute Zugänglichkeit am Milchsammelstück ermöglicht, ohne dass dieses gegebenenfalls geöffnet wird, so dass die mehreren Milchschlauchstücke rasch ersetzt werden können, ohne dass weitere Montiertätigkeiten erforderlich sind.

Mit Bezug zu den begleitenden Zeichnungen werden nunmehr weitere anschauliche Ausführungsformen detaillierter beschrieben. In den Zeichnungen zeigen:

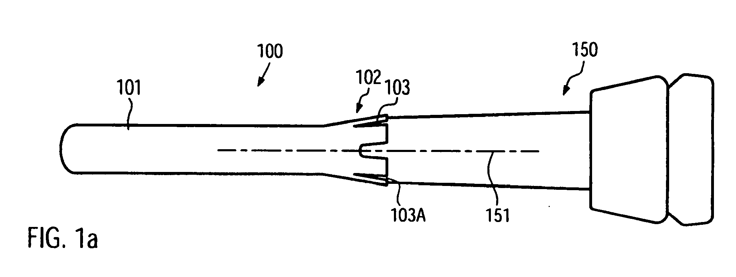

Fig. 1a eine schematische Ansicht einer Montageeinrichtung gemäß einer Ausführungsform, die sich im Eingriff mit einem Schlauchstück in Form eines Zitzengummis befindet,

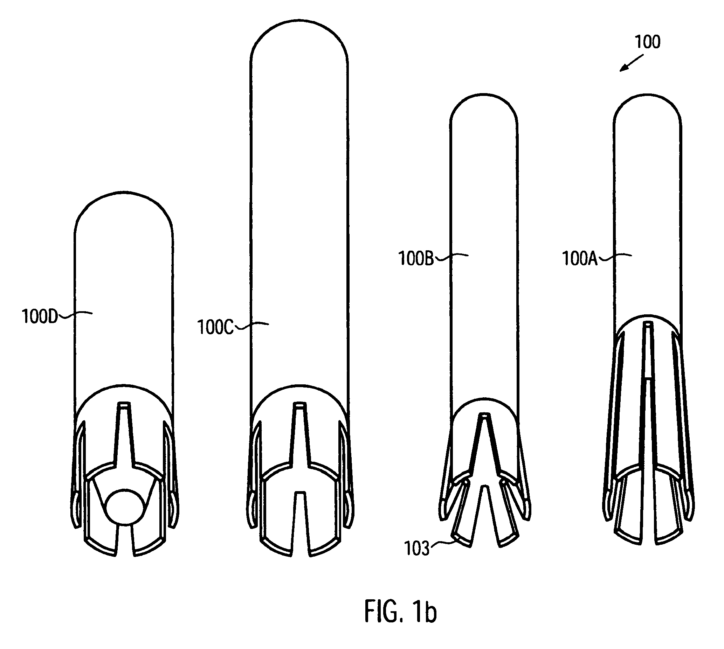

Fig. 1b schematisch mehrere Montageeinrichtungen mit verschiedenen Durchmessern, die für das Einsetzen von Schlauchstücken in verschiedenen Anschlussöffnungen geeignet sind,

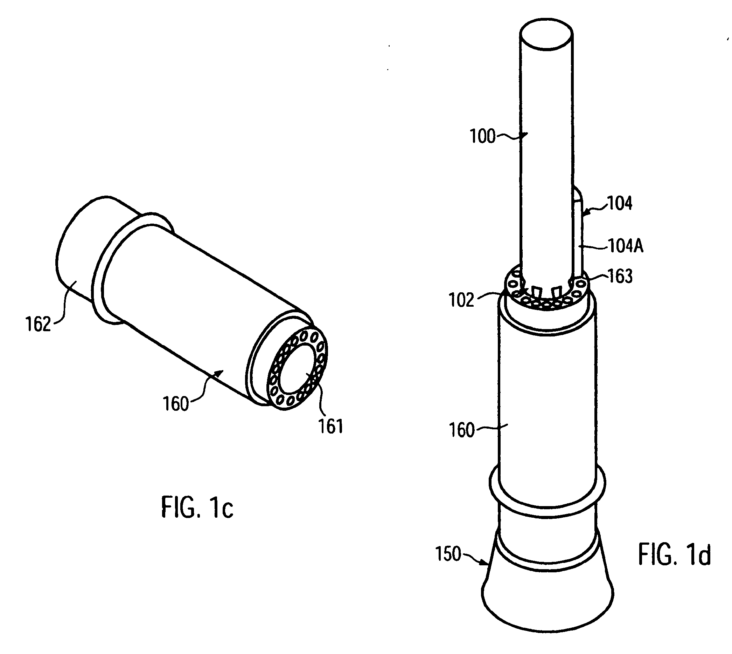

Fig. 1c schematisch einen Melkbecher mit einer Öffnung am Fuße des Melkbechers, in die ein Schlauchstück in Form eines Zitzengummis einzusetzen ist,
Fig. 1d schematisch die Montageeinrichtung während des Einsetzens eines Zitzengummis in einen Melkbecher, wobei eine Führungseinrichtung gezeigt ist, die ein Verdrehen des Zitzengummis verhindert,

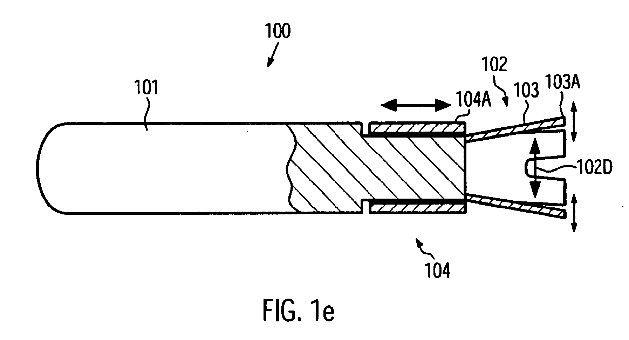

Fig. 1e schematisch eine Querschnittsansicht einer Montageeinrichtung mit einer Spann- bzw. Arretiereinrichtung zur Einstellung der radialen Aufweitung der Halteeinrichtung gemäß anschaulicher Ausführungsformen,

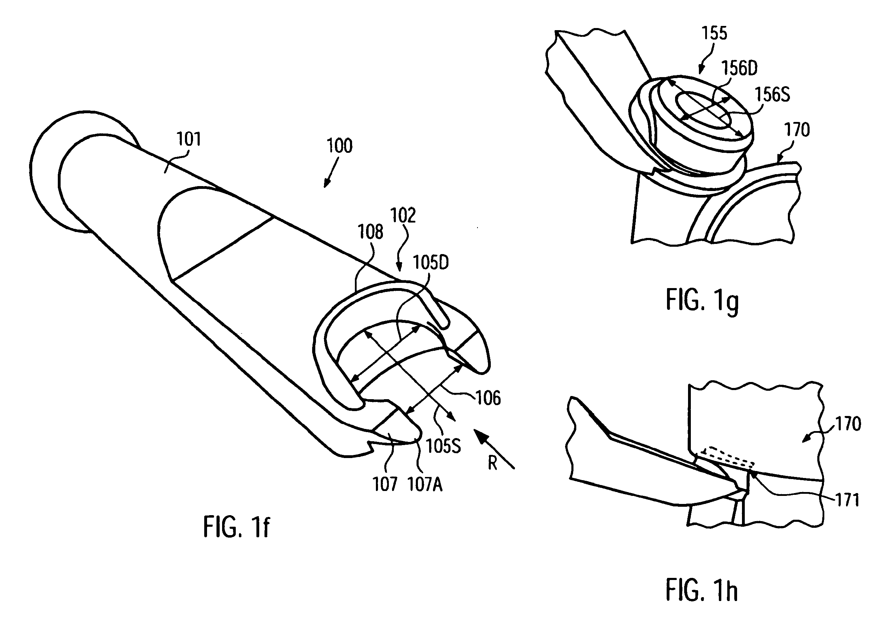

Fig. 1f schematisch eine perspektivische Ansicht der Montageeinrichtung gemäß einer weiteren Ausführungsform, in der eine Montageöffnung zum radialen Eingriff in ein Schlauchstück zum gesteuerten Verformen des Schlauchstücks vorgesehen ist,
Fig. 1g eine schematische perspektivische Ansicht der Montageeinrichtung aus Fig. 1f, wobei diese sich im Eingriff mit einem Zitzengummi-Endbereich befindet,
Fig. 1h schematisch die Montageeinrichtung beim Ansetzen an eine Anschlussöffnung eines Milchsammelstücks,

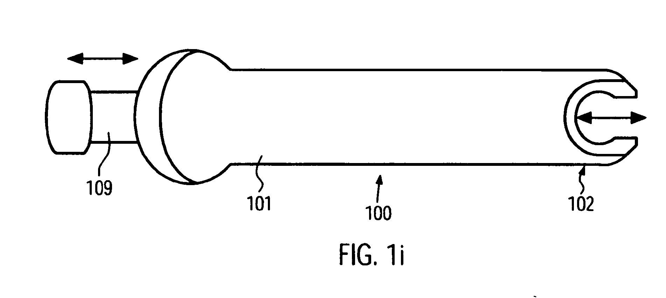

Fig. 1i eine schematische Ansicht der Montageeinrichtung gemäß einer weiteren Ausführungsform, in der ein Schiebeelement vorgesehen ist, um nach erfolgter Montage das Schlauchstück effizient aus der Montageöffnung herauszuführen,

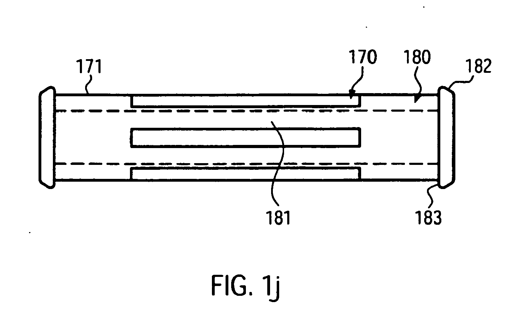

Fig. 1j zeigt ein Absperrventil einer Milchleitung mit einem Schlauchstück in einem Einsatz, und

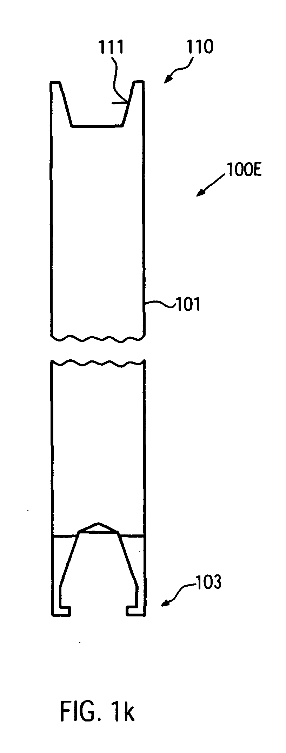

Fig. 1k zeigt schematisch eine Querschnittsansicht einer Montageeinrichtung mit einem Demontagebereich zur Demontage des Schlauchstücks des in Fig. 1j gezeigten Absperrventils.

Fig. 1a zeigt schematisch eine Ansicht einer Montageeinrichtung 100 gemäß einer anschaulichen Ausführungsform, in der ein Griff 101, in Form eines länglichen Körpers, mit einer Halteeinrichtung 102 verbunden ist. In der gezeigten Ausführungsform ist die Montageeinrichtung 100 so ausgebildet, dass die Halteeinrichtung 102 in ihrer radialen Abmessung variabel ist, so dass ein Endbereich eines Schlauchstücks 150, das in der gezeigten Ausführungsform in Form eines Zitzengummis vorgesehen ist, zumindest abschnittsweise über den gesamten Umfang hinweg verteilt umschlossen werden kann. D.h., die Halteeinrichtung 102 ist so gestaltet, dass diese entlang einer Längsachse 151 des Schlauchstücks mit dem Endbereich in Kontakt gebracht werden kann, so dass die radiale Abmessung bzw. der Durchmesser der Halteeinrichtung 102 entsprechend anpassbar ist, um den Endbereich des Schlauchstücks 100 zu umfassen. Dazu sind in der dargestellten Ausführungsform einzelne Greifelemente bzw. Greifbacken 103 vorgesehen, die über den Umfang der Halteeinrichtung 102 hinweg verteilt sind und dabei mit dem länglichen Körper bzw. Griff 101 in radialer Richtung bewegbar verbunden sind. In der dargestellten Ausführungsform sind die Greifbacken 103 elastisch mit dem Griff 101 verbunden, so dass bei Ausübung einer radialen Kraft auf die einzelnen Greifbacken 103 eine Änderung der radialen Position möglich ist. Somit kann durch Aufstecken der Halteeinrichtung 102 auf das Schlauchstück 150 entlang der Längsachse 151 eine Aufweitung des Durchmessers der durch die Greifbacken 103 gebildeten Öffnung bewirkt werden, wobei dann die Eigenelastizität der Greifbacken 103 in Verbindung mit dem Körper 101 zu einer entsprechenden mechanischen Fixierung der Halteeinrichtung 102 und des Schlauchstücks 150 erfolgt.

Wie nachfolgend detaillierter beschrieben ist, kann in anderen Ausführungsformen die Halteeinrichtung 102 auch "aktiv" verstellbar sein, indem der Durchmesser der durch die Greifbacken 103 gebildeten Öffnung mittels entsprechender Einrichtungen einstellbar und fixierbar ist. In der gezeigten Ausführungsform sind die Greifbacken 103 der Halteeinrichtung 102 aus einem geeigneten Kunststoffmaterial hergestellt, das somit in effizienter Weise hergestellt werden kann und auch für die gewünschte elastische Verbindung der Greifbacken 103 sorgt. Der längliche Körper bzw. Griff 101 kann dabei aus dem gleichen Material hergestellt sein, so dass bei Bedarf die gesamte Montageeinrichtung 100 aus einem einzelnen Material und bei Bedarf aus einem Einzelmaterialblock hergestellt ist. In anderen Ausführungsformen können verschiedene Materialien Verwendung finden, beispielsweise kann die Halteeinrichtung 102 mit speziellen Oberflächen oder sonstige Materialien versehen sein, die eine möglichst schonende Kontaktierung mit dem Schlauchstück 150 ermöglichen, so dass auch bei empfindlichen Materialien keine Gefahr einer Beschädigung besteht. Beispielsweise können die Greifbacken 103 an ihren Außenseiten mit einem relativ haltbaren Material, beispielsweise in Form von Metall, besonders widerstandsfähigen Kunststoff, und dergleichen hergestellt sein. Andererseits können an entsprechenden Eingriffelementen 103a, die in einigen Ausführungsformen so gestaltet sind, dass sie in entsprechende Vertiefungen des Schlauchstücks 150 eingreifen können, die für den Kontakt mit dem Schlauchstück 150 geeignet ist, Materialien vorgesehen sein, die einen schonenden Kontakt zu dem Schlauchstück ermöglichen. Die Montageeinrichtung 100 ist in anderen Ausführungsformen so gestaltet, dass gegebenenfalls die Halteeinrichtung 102 mechanisch reversibel von dem Griff bzw. länglichem Körper 101 getrennt werden kann, so dass bei Bedarf verschiedene Arten von Halteeinrichtungen 102 mit dem gleichen Griff 101 oder umgekehrt verschiedene Griffe 101 mit der gleichen Halteeinrichtung 102 kombiniert werden können. Beispielsweise können verschiedene Halteeinrichtung 102 in Verbindung mit unterschiedlichen Schlauchstücken eine unterschiedliche Gestaltung aufweisen, beispielsweise im Hinblick auf eine Anpassung auf die Länge der Greifbacken 103, auf deren Anzahl, Oberflächenbeschaffenheit und dergleichen, so dass ein hohes Maß an Flexibilität bei der Verwendung der Montageeinrichtung 101 erreicht wird, indem lediglich ein Teil davon der entsprechenden Anwendung anzupassen ist. Zu diesem Zweck können geeignete Schraubverbindungen und dergleichen zwischen dem Griff 101 und der Halteeinrichtung 102 verwendet werden.

Fig. 1b zeigt schematisch mehrere Montageeinrichtungen 100a, ..., 100d, die im wesentlichen den gleichen Aufbau aufweisen, wie die Montageeinrichtung 100 aus Fig. 1a, die sich aber voneinander beispielsweise im Durchmesser, der Anzahl der Greifbacken in den Halteeinrichtungen 102, und dergleichen unterscheiden. Die Halteeinrichtungen 100a, ..., 100d sind ebenso wie die Haltereinrichtung 100 aus Fig. 1a an entsprechende Schlauchstücke, beispielsweise Zitzengummis, sowie entsprechende Melkbecher angepasst, derart, dass die Endbereiche der Zitzengummis von den jeweiligen Halteeinrichtungen 102 umfasst werden und anschließend beim Hindurchführen durch eine Öffnung des Melkbechers kurzzeitig verformt und in ihrem Durchmesser reduziert werden können, so dass damit ein Einsetzen des Schlauchstücks in die Anschlussöffnung des Melkbechers möglich ist. Dazu ist auch der Griff 101 in seinem Durchmesser der entsprechenden Öffnung angepasst. In den gezeigten Ausführungsformen besitzt beispielsweise die Halteeinrichtung 102, die Greifbacken 103 in Form von fünf einzelnen langgestreckten Elementen, die sich jeweils als ein zusammenhängendes Materialstück von dem Griff 101 erstrecken. Die Montageeinrichtung 100d besitzt einen etwas größeren Durchmesser, wobei auch die sechs Greifbacken 103 voneinander einen größeren Abstand in der Umfangsrichtung aufweisen und auch ihre Erstreckung in der Umfangsrichtung geringer ist, so dass sich insgesamt ein höherer Grad an Elastizität ergibt, der ein Verändern der radialen Abmessung bzw. des Durchmessers der von den Greifbacken 103 gebildeten Öffnung bei nur einer geringen radialen Kraft ermöglicht. Die Montageeinrichtung 100c besitzt einen größeren Durchmesser, entsprechend den Abmessungen zugeordneter Melkbecher, wobei auch die sechs Greifbacken 103 so gestaltet sind, dass das Verhältnis von Abstand zu Abmessung in Richtung der Umfangsrichtung der Greifbacken 103 größer ist, als dies beispielsweise bei der Montageeinrichtung 100b der Fall ist. Des weiteren ist in der durch die Greifbacken 103 definierten Öffnung ein konusförmiges_Element vorhanden, an dessen Oberfläche die Innenseite des Schlauchstücks, d.h. des Zitzengummis, anliegen kann, so dass sich eine sehr stabile und spielfreie Verbindung beim Anstecken der Montageeinrichtung 100c an den entsprechenden Zitzengummi ergibt. In ähnlicher Weise ist auch die Montageeinrichtung 100d ausgebildet, wobei dort der Griff bzw. längliche Körper 101 eine geringere Länge aufweist.

Wie aus Fig. 1b ersichtlich ist, können die Montageeinrichtungen 100 dem speziellen Anwendungszweck, d.h. den Abmessungen der jeweiligen Anschlussöffnungen, beispielsweise den Durchmessern der Öffnungen der Melkbecher sowie den Durchmessern und der Beschaffenheit der Schlauchstücke angepasst werden. Wie zuvor erläutert wurde, sind in Agrarbetrieben gegebenenfalls sehr unterschiedliche Materialien für Zitzengummis im Einsatz, wobei unterschiedliche Materialmischungen zu unterschiedlichen Verformungseigenschaften der entsprechenden Zitzengummis führen. Bei bekannten geometrischen Abmessungen der Melkbecher und der Zitzengummis kann somit auch eine Anpassung an die entsprechende Verformbarkeit durch eine Auswahl der Montageeinrichtungen 100 oder zumindest der Halteeinrichtungen 102 bewerkstelligt werden, so dass ein rascher und effizienter Tausch der Zitzengummis erfolgen kann. Beispielsweise können für besonders harte und wenig flexible Gummimischungen entsprechend ausgebildete Montageeinrichtungen bzw. Halteeinrichtungen 102 verwendet werden, wie sie etwa durch die Ausführungsformen 100c und 100d gezeigt sind. Bei anderen Gummimischungen, die gegebenenfalls einen höheren Grad an Verformbarkeit besitzen und gegebenenfalls auch eine größere Wandstärke aufweisen, kann etwa die Montageeinrichtung 100d geeignet sein, deren Halteeinrichtung 102 aufgrund der sehr flexiblen Greifbacken 103 eine größere radiale Änderungen ihrer durch die Greifbacken 103 definierten Öffnung ermöglicht werden. Wie zuvor bereits erläutert wurde, können bei Bedarf auch entsprechende Halteeinrichtungen mit jeweils dem gleichen Griff 101 verwendet werden, wenn diese durch eine mechanisch reversible Verbindung miteinander gekoppelt sind.

Fig. 1c zeigt schematisch eine perspektivische Ansicht eines typischen Melkbechers 160, wie er in semiautomatisierten oder vollautomatisierten Melkeinrichtungen Verwendung finden kann. In der gezeigten Ausführungsform repräsentiert der Melkbecher 160 beispielsweise einen Becher, wie er in typischen vollautomatisierten Melkrobotern verwendet wird. Der Melkbecher 160 weist dazu eine Anschlussöffnung 161 auf, deren Durchmesser an die mechanischen Gegebenheiten der Melkeinrichtung angepasst ist. Beispielsweise wird der Melkbecher 160 mit einer entsprechenden Mechanik verbunden, die für die Bewegung des Melbechers 160 sowie die Ableitung der ermolkenen Milch sorgt. Des weiteren weist der Melkbecher 160 einen oberen Rand 162 mit einer entsprechenden Öffnung auf, in die der Zitzengummi eingeführt wird, wobei der Kopf des Zitzengummis über den Rand 162 gestülpt ist und somit die Öffnung bildet, in die die Zitze des Tieres beim Melkvorgang eingeführt wird.

Fig. 1d zeigt eine schematische perspektivische Ansicht der Montageeinrichtung 100 gemäß einer Ausführungsform, wenn diese eingesetzt wird, um den Zitzengummi 150 in den Melkbecher 160 einzuführen und den Endbereich des Zitzengummis 150 in die Öffnung 161 einzusetzen. Zu diesem Zweck wird die Montageeinrichtung 100 auf den Endbereich des Zitzengummis 150 aufgesetzt, wie dies beispielsweise in Fig. 1a gezeigt ist, so dass die Halteeinrichtung 102 den Endbereich des Zitzengummis 150 geeignet umfasst, wie dies auch in Fig. 1a gezeigt ist. Daraufhin wird die Montageeinrichtung 100 zusammen mit dem Zitzengummi 150 von oben her in die durch den Rand 162 definierte Öffnung des Melkbechers 160 eingeführt und durch die Öffnung 161 beginnend mit dem Griff 101 hindurchgeführt. Dabei ist der Griff 101 so ausgebildet, dass dieser zumindest einen geeigneten Durchmesser aufweist, so dass er durch die Öffnung 161 hindurchgeführt werden kann. In der in Fig. 1d gezeigten Ausführungsform weist dazu die Montageeinrichtung 100 eine Justiereinrichtung 104 auf, die ein Verdrehen um die Längsachse 151 des Zitzengummis 150 während des Einsetzens des Zitzengummis 150 im wesentlichen verhindert. Die Justiereinrichtung 104 besitzt in der gezeigten Ausführungsform eine Führungsschiene 104a, die mit einer entsprechenden Aussparung 163, die in der die Öffnung 161 bildenden Wand des Zitzenbechers 160 ausgebildet ist, im Eingriff ist. Somit kann während des Durchführens der Montageeinrichtung 100 ein Verdrehen des Zitzengummis 150, insbesondere beim Durchziehen des unteren Endes des Zitzengummis 150 durch die Öffnung 161 verhindert werden, so dass die elastischen Eigenschaften des Zitzengummis 150 während des späteren Betriebs in gewünschter Weise erhalten bleiben, wie dies etwa bei einem pulsierenden Melkbetrieb erforderlich ist.

In Fig. 1d ist die Situation gezeigt, in der die Halteeinrichtung 102 aufgrund ihres Kontakts mit der Öffnung 161 zunehmend in der radialen Abmessung, d.h. in ihrem Durchmesser reduziert wird, so dass sich der von der Halteeinrichtung 102 umfasste Bereich des Zitzengummis 150 entsprechend verformt und damit auch in seinem Durchmessern reduziert. In der gezeigten Ausführungsform findet somit eine Verringerung des Durchmessers in symmetrischer Form statt, so dass der Durchmesser in dem oben definierten Sinne in jeder radialen Richtung in gleicher Weise reduziert wird. Die für die Verformung und damit die Verringerung des Durchmessers des Zitzengummis 150 erforderliche Kraft wird durch das Ziehen des Griffes 101 aufgrund der Kraftwirkung der Wand der Öffnung 161 auf die radial bewegbaren Greifbacken 103 ausgeübt. Gleichzeitig sorgen die Greifbacken 103 dafür, dass ein Kontakt des Zitzengummimaterials mit der Wand der Öffnung 161 während des Durchziehens im wesentlichen vermieden wird, so dass auch keine Schädigung des Zitzengummimaterials auftreten kann. Ein möglicherweise geringfügiger Kontakt des Zitzengummimaterials, das gegebenenfalls in den Zwischenräumen zwischen den einzelnen Greifbacken 103 mit der Oberfläche der Wand der Öffnung 161 in Berührung kommen kann, führt dabei in der Regel zu keiner Schädigung.

Fig. 1e zeigt eine schematische Querschnittsansicht der Montageeinrichtung 100, in der eine radiale Abmessung bzw. ein Durchmesser 102d der Halteeinrichtung mittels einer Spanneinrichtung bzw. Arretiereinrichtung 104 in gewünschter Weise verstellt und fixiert werden kann. Die Arretiereinrichtung 104 weist dazu in der gezeigten Ausführungsform ein in Längsrichtung bewegbares Element 104 auf, das beispielsweise als Gewindeelement vorgesehen ist. Somit lässt sich durch Drehung des Elements 104a in Längsrichtung in steuerbarer Weise eine Änderung der radialen Abmessung erreichen, wodurch bei zunehmender Bewegung in Richtung der Greifbacken 103 eine zunehmende Verringerung des Durchmessers 102d bewirkt wird. Durch die geeignete Einstellung der Position des Elements 104a in der Längsrichtung wird somit auch eine entsprechende Verringerung des Durchmessers 102d ermöglicht. Andererseits wird durch eine Bewegung in Richtung des Griffs 101 der Durchmesser 102d, etwa aufgrund einer Eigenelastizität der Greifbacken 103 vergrößert. In anderen Ausführungsformen kann die mechanische Kopplung zwischen dem Element 104a und den Greifbacken 103 so erfolgen, dass die Greifbacken 103 keine ausgeprägte Eigenelastizität aufweisen müssen. Mittels der Arretiereinrichtung 104 kann somit das Umfassen des Zitzengummis 150 ohne Aufwenden einer größeren Kraft in axialer Richtung erfolgen, wobei auch ein hohes Maß an Flexibilität bei der Gestaltung der Greifbacken 103 und gegebenenfalls ihrer Eingriffsabschnitte 103a möglich ist. Auch kann dabei die Anpassung des Durchmessers des Schlauchstücks bereits vor dem Einführen der Montageeinrichtung 100 in den Melkbecher 160 erfolgen, indem etwa die Arretiereinrichtung 104 entsprechend betätigt wird, wozu bei Bedarf ein entsprechendes Werkzeug zur Erhöhung des Drehmoments verwendet werden kann, so dass dann beim Durchführen die Montageeinrichtung 100 durch die Öffnung 161 kein hoher Kraftaufwand erforderlich ist und gegebenenfalls eine Wechselwirkung mit der Wand der Öffnung 161 nur gering ist. Auf diese Weise wird der Verschleiß sowohl an den Greifbacken 103 als auch an dem Melkbecher 160 gering gehalten. Nach erfolgtem Durchführen des Endbereichs des Zitzengummis 150 können dann die Greifbacken 103 mittels der Arretiereinrichtung 104 freigegeben werden, so dass sich die Montageeinrichtung 100 leicht von dem umfassten Teil des Zitzengummis 150 lösen lässt.

Fig. 1f zeigt schematisch eine weitere Ausführungsform der Montageeinrichtung 100, in der die Halteeinrichtung 102 so ausgebildet ist, dass eine Montageöffnung 105 gebildet ist, in die ein Endbereich des Schlauchstücks, etwa der Endbereich eines kurzen Milchschlauchs, der in einer Anschlussöffnung eines Milchsammelstücks zu installierten ist, eingeführt werden kann. Zu diesem Zweck ist die Montageöffnung 105 nicht vollständig geschlossen, sondern besitzt eine Aufnahmeöffnung 106, über die in der radialen Richtung R das entsprechende Schlauchstück eingeschoben werden kann. Dabei ist der Durchmesser der Montageöffnung 105 so gewählt, dass dieser kleiner ist als der Innendurchmesser der Anschlussöffnung des Milchsammelstücks, so dass sich durch das Einführen des Schlauchstücks eine entsprechende Verformung und damit eine Reduzierung des Durchmessers des Schlauchstücks in der radialen Richtung 105d ergibt, während in einer dazu senkrechten Richtung 105s aufgrund der Anwesenheit der Aufnahmeöffnung 106 die Deformierung zu einer Vergrößerung der ursprünglichen radialen Abmessung des Schlauchstücks führt. In der gezeigten Ausführungsform wird somit die Montageöffnung 105 in Form eines Ringsegments bereitgestellt, das durch entsprechende Backen 107 gebildet ist, wobei entsprechende Anfangsbereiche 107a der Backen 107 entsprechend angeschrägt sind, um ein Ansetzen an der Anschlussöffnung des Milchsammelstücks zu erleichtern.

Des weiteren besitzt die Montageeinrichtung 100 in der dargestellten Ausführungsform ein Führungselement 108, das zumindest teilweise entlang des Umfangs des durch die Backen 107 definierten Ringsegments geführt ist. Das Führungselement 108 ist dabei so gestaltet, dass dessen Außendurchmesser an den Innendurchmesser der Anschlussöffnung des Milchsammelstücks angepasst ist. Auf diese Weise kann die Montageeinrichtung 100 zuverlässig an der Anschlussöffnung angesetzt und formschlüssig zusammen mit dem verformten Schlauchstückende in diese eingeführt werden.

Die Montageeinrichtung 100 der Fig. 1f kann bei Bedarf ebenfalls aus einem geeigneten Material, etwa Kunststoffmaterial hergestellt werden, wobei der Griff 101 und die Halteeinrichtung 102 aus dem gleichen Material oder unterschiedlichen Materialien aufgebaut sein könnten und auch eine mechanische Fixierung dieser beiden Teile 101 und 102 reversibel sein kann, um bei Bedarf den Griff 101 oder die Halteeinrichtung 102 entsprechend den Erfordernissen auszutauschen. Die Halteeinrichtung 102 kann mit einer Verstelleinrichtung versehen sein, in der gegebenenfalls in einem gewissen Maße der wirksame Durchmesser 105d der Montageöffnung 105 und/oder die Aufnahmeöffnung 106 verstellbar sind, um damit möglicherweise geringen Unterschieden in entsprechenden Schlauchstückmaterialien, Durchmessern der Anschlussöffnungen von Milchsammelstücken, und dergleichen Rechnung zu tragen.

Fig. 1g zeigt schematisch die Montageeinrichtung 100 während eins Vorgangs für das Einsetzen eines Milchschlauches, der in einigen Anwendungsbeispielen einen Schlauchbereich eines Zitzengummis repräsentiert und eine Einheit mit diesem bildet, wobei diese Einheit häufig als "Monoblock" bezeichnet wird. Wie gezeigt, ist ein Milchschlauch 155 mit seinem Endbereich in die Montageöffnung 105 eingeführt, wobei dies durch Ansetzen der Montageeinrichtung 100 und Ausüben einer radialen Bewegung (siehe Fig. 1f) bewerkstelligt werden kann. Während dieses Ansetzens wird, wie zuvor erläutert ist, ein Durchmesser 156d des Schlauchstücks entsprechend den Abmessungen 105d der Montageöffnung 105 aufgrund einer Verformung des Schlauchstücks 155 verringert. Durch die hervorgerufene Verformung wird eine Vergrößerung des Durchmessers 156s in der zur Richtung 156d senkrechten Richtung bewirkt, da sozusagen Material des Schlauchstücks 155 aus der Montageöffnung 105 nach Außen über die Aufnahmeöffnung 106 "verdrängt" wird. Da, wie gezeigt, die Abmessungen der Montageeinrichtung 100 bzw. der Halteeinrichtung 102 nur geringfügig größer sind als die Abmessungen des Schlauchbereichs 155, kann dieser Vorgang effizient in unmittelbarer Nähe eines Milchsammelstücks 170 erfolgen, ohne dass eine wesentliche Demontage des Milchsammelstücks 170 oder entsprechender Komponenten davon erforderlich ist.

Fig. 1h zeigt schematisch den Vorgang des Einsetzens des Schlauchstücks 155 in eine Anschlussöffnung 171 des Milchsammelstücks 170 in einer Phase, in der die Montageeinrichtung 100 mittels des Führungselements 108 und der Backen 107 bzw. deren Endbereichen 107a an der Anschlussöffnung 171 angesetzt wird. Dazu wird die Montageeinrichtung 100 so an die Anschlussöffnung 171 herangeführt, dass ein Teil des durch die Aufnahmeöffnung 106 verformten Schlauchstücks 155 in die Öffnung 171 eingeführt und anschließend durch direkten Kontakt der Backen 107 und des Milchsammelstücks 170 das Führungselement 108 in die Öffnung 171 eingesetzt wird. Bei Bedarf kann bei diesem Vorgang ein entsprechendes Gleitmittel, beispielsweise Wasser, Silikonspray und dergleichen, verwendet werden. Nach dem erfolgten Einsetzen des Schlauchstücks 155 kann dann die Montageeinrichtung in radialer Richtung abgezogen werden, so dass dann das Schlauchstück 155 in der Öffnung 171 verbleibt.

Fig. 1i zeigt schematisch die Montageeinrichtung 100 gemäß weiterer anschaulicher Ausführungsformen, in denen ein Schiebeelement 109 vorgesehen ist, das bei Betätigung in die Montageöffnung 105 in radialer Richtung eingeführt werden kann, um damit das Abziehen der Montageeinrichtung 100 nach erfolgter Montage des Schlauchstücks 155 zu erleichtern. In der gezeigten Ausführungsform ist das Schiebeelement 109 in Form einer Schubstange vorgesehen, die vom Griff 101 aus betätigt werden kann, um damit bei Bedarf einen Kontakt zu dem Schlauchelement in der Montageöffnung 105 herzustellen. Die Ausführungsform aus Fig. 1i zeigt lediglich den prinzipiellen Aufbau, wobei in anderen Anführungsformen der Griff 101 in geeigneter Weise gestaltet ist, so dass die Handhabung der Montageeinrichtung 100 im Zusammenwirken mit dem Schiebeelement 109 in ergonomisch effizienter Weise stattfinden kann. Beispielsweise kann ein pistolenartiger Griffbereich vorgesehen werden, an dem auch ein entsprechendes Betätigungselement angeordnet ist.

In weiteren Ausführungsformen wird die Montageeinrichtung zur Montage und Demontage eines "Schlauchventils" verwendet. Bekanntlich werden in den Zuleitungen von automatischen Melkanlagen steuerbare Ventile eingesetzt, die zuverlässig arbeiten müssen und dabei einen einfachen Aufbau besitzen sollen, so dass sie effizient zu reinigen sind. Zu diesem Zweck werden häufig Schlauchstücke eingesetzt, die in einem "Käfig" eingespannt sind und somit von der Außenseite mit Druck, etwa dem Atmosphärendruck, oder mit dem Betriebsunterdruck beaufschlagt werden können. Dadurch kann das Mittelstück des Schlauchstücks eingefaltet werden, wenn an dessen Außenseite Atmosphärendruck anliegt, so dass ein die Leitung aufgrund des eingefalteten Mittelstücks unterbrochen ist. Andererseits nimmt das Schlauchstück bei Einwirkung des Unterdrucks an der Außenseite seine unverformte Gestalt auf Grund der Elastizität des Schlauchstücks ein, so dass die Leitung offen ist. Dieser steuerbare Ventilmechanismus ergibt eine robuste und zuverlässige Funktion, wobei aber dennoch auf Grund der Materialermüdung ein regelmäßiges oder zumindest ein doch relativ häufiges Austauschen erforderlich ist. Die dazu notwendigen Montageschritte können dabei vorteilhaft unter Verwendung der erfindungsgemäßen Montageeinrichtung erfolgen, wie nachfolgend mit Bezug zu Fig. 1j und 1k beschrieben ist.

Fig. 1j zeigt schematisch einen Einsatz 170 in Form eines "Käfigs" mit einem darin angebrachten Schlauchstück 180, das ein Mittelstück 181 aufweist, das als der eigentliche Ventilbereich dient. Die Enden 182 des Schlauchstücks 180 besitzen eine Führungsnut 183, die einen größeren Durchmesser aufweist als zumindest der Innendurchmesser des Endstücks 171 des Einsatzes 170, so dass ein Hineinrutschen des Schlauchstücks 170 in den Einsatz 180 vermieden wird. Dies ergibt eine zuverlässige Befestigung des Schlauchstücks 180 während des Betriebs, führt aber auch konventioneller Weise zu einer zeitaufwendigen Handlungsweise, wenn das Schlauchstück ersetzt werden soll. Zu diesem Zweck ist in einer Ausführungsform die Montageeinrichtung 100 so ausgebildet, dass nach erfolgter Entfernung des Schlauchstücks180 die Montageeinrichtung 100, wie sie etwa im Zusammenhang mit den Fig. 1a bis 1e beschrieben ist, das Ende 182 eines neuen Schlauchstücks 180 zu umfassen und dieses zu verformen, wozu eine entsprechende Halteeinrichtung, etwa die Einrichtung 103 vorgesehen ist. Damit kann das Ende 182 an einem Endstück 171 davon eingeführt und in Längsrichtung durch den Einsatz 170 geführt werden. Durch die Verformung kann das umfasste Ende 180 dann am anderen Ende 171 des Einsatzes 170 herausgezogen werden, wie dies zuvor auch für Zitzengummis in ähnlicher Weise beschrieben ist. Dazu ist der Durchmesser der Montageeinrichtung 100 sowie die Größe und die Gestalt der Greifbacken dem Durchmesser des Einsatzes 170 und damit dem Durchmesser des Schlauchstücks 180 angepasst, wie dies auch zuvor beschrieben ist.

Vor der Neumontage eines neuen Schlauchstücks 180 kann in einer Ausführungsform eine sehr effiziente Demontage des alten Schlauchstücks 180 unter Verwendung einer Montageeinrichtung 100e erfolgen, die zu diesem Zweck einen geeigneten Demontagebereich aufweist.

Fig. 1k zeigt schematisch einen Querschnitt der Montageeinrichtung 100e, in der ein Demontagebereich 110 vorgesehen ist, der eine Verformung des Endes 182 des Schlauchstücks 180 ermöglicht. Der Demontagebereich 110 weist in einer Ausführungsform einen dem Außendurchmesser des Endes 182 angepassten Verformungsbereich 111 auf, der eine sich verjüngende, etwa konisch zulaufende, Oberfläche besitzt.

In der dargestellten Ausführungsform sind der Demontagebereich 110 und die Halteeinrichtung 103 an dem gemeinsamen Griff 101 angebracht, so dass sich beide Funktionen, also Montage und Demontage, in einem einzigen Werkzeug vereinen lassen.

Die vorliegende Erfindung stellt somit Montageeinrichtungen bereit, um Schlauchelemente, die für die Leitung von Nahrungsmitteln geeignet sind, effizient in Anschlussöffnungen von entsprechenden Sammeleinheiten einzusetzen und bei Bedarf auch herauszulösen. Insbesondere können die hierin dargestellten Montageeinrichtungen vorteilhaft für das Einbringen von Zitzengummis in Melkbechern und das Anschließen von kurzen Milchschläuchen, die beispielsweise in integraler Form zusammen mit Zitzengummis ausgebildet sind, an Milchsammelstücken verwendet werden. In weiteren Ausführungsformen können effizient Schlauchstücke, die zur Leitungsabsperrung dienen, effizient montiert und demontiert werden. Durch eine zeitweilige gesteuerte Deformierung des Schlauchstücks, die beispielsweise zu einer nahezu gleichmäßigen Verringerung des Durchmessers führen kann oder zumindest zu einer kontrollierten Reduzierung in einer radialen Richtung, wird das Einführen in die entsprechende Anschlussöffnung ermöglicht, ohne dass eine Beschädigung des Schlauchstücks erfolgt. Auf diese Weise können die Montagezeiten zum Auswechseln von verschlissenen Schlauchstücken, etwa von Zitzengummis, deutlich verringert werden, was sich insbesondere in Agrarbetrieben vorteilhaft auf die gesamten Produktionskosten auswirkt, da dort entsprechende Zitzengummi Verschleißteile sind und regelmäßig ersetzt werden müssen, wobei diese effizient durch nicht speziell geschultes Personal rasch und ohne Schädigung der Zitzengummis erfolgen kann.

## Patentansprüche

1. Montageeinrichtung (100) zum Einsetzen eines verformbaren zur Leitung von Nahrungsmitteln geeigneten Schlauchstücks (150) in eine Öffnung, mit
einer den Umfang des Schlauchstücks zumindest teilweise umschließenden Halteeinrichtung, die ausgebildet ist, einen dem Schlauchstück entsprechenden ursprünglichen Durchmesser zumindest beim Einführen des Schlauchstücks (150) in die Öffnung (105) in zumindest einer radialen Richtung gesteuert zu reduzieren, und
einem mit der Halteeinrichtung verbunden Griff (101).

2. Montageeinrichtung nach Anspruch 1, wobei die Halteeinrichtung ausgebildet ist, einen Endbereich eines Zitzengummis zumindest teilweise zu umschließen.

3. Montageeinrichtung nach Anspruch 2, wobei die Halteeinrichtung zwei oder mehr Greifbacken (103) aufweist.

4. Montageeinrichtung nach einem der Ansprüche 1 bis 3, wobei die zwei oder mehr Greifbacken (103) einen Eingriffsabschnitt zum Eingreifen in eine Vertiefung des Schlauchstücks aufweisen.

5. Montageeinrichtung nach einem der Ansprüche 3 oder 4, die ferner eine Arretiereinrichtung aufweist, die ausgebildet ist, die Greifbacken in einer Betriebsstellung zum Halten des Schlauchstücks zu halten.

6. Montageeinrichtung nach einem der Ansprüche 1 bis 5, die ferner eine Justiereinrichtung (104) zur Führung der Montageeinrichtung durch eine Öffnung eines Melkbechers aufweist.

7. Montageeinrichtung nach Anspruch 1 oder 2, wobei die Halteeinrichtung ausgebildet ist, das Schlauchstück teilweise zu umfassen und zu verformen, um dessen Durchmesser in der zumindest einen radialen Richtung zu reduzieren und in einer dazu senkrechten radialen Richtung zu vergrößern.

8. Montageeinrichtung nach Anspruch 7, wobei die Halteeinrichtung zwei Greiferbacken aufweist, die in einer Montagestellung fixierbar sind und ein Ringsegment bilden mit einer Aufnahmeöffnung, die ein radiales Einführen des Schlauchstücks in das Ringsegment ermöglicht.

9. Montageeinrichtung nach Anspruch 8, wobei die zwei Greifbacken verstellbar sind, so dass ein Durchmesser des Ringsegments einstellbar ist.

10. Montageeinrichtung nach Anspruch 9, wobei die Halteeinrichtung zwei Greiferbacken aufweist, die starr mit dem Griff verbunden sind und ein Ringsegment bilden mit einer Aufnahmeöffnung, die ein radiales Einführen des Schlauchstücks in das Ringsegment ermöglicht.

11. Montageeinrichtung nach einem der Ansprüche 8 bis 10, die ferner einen Führungssteg (108) aufweist, der zumindest entlang eines Teils des Umfangs des Ringsegments ausgebildet ist.

12. Montageeinrichtung nach einem der Ansprüche 8 bis 11, wobei ferner ein bewegbares Schiebeelement (109) vorgesehen ist, das bei Betätigung mit dem von der Halteeinrichtung gehaltenen Schlauchstück in Kontakt gebracht werden kann.

13. Montageeinrichtung nach einem der Ansprüche 1 bis 12, wobei ein sich verjüngender Demontagebereich (110) vorgesehen ist, der zur Verformung eines Endes des Schlauchstücks geeignet ausgebildet ist.

14. Montageeinrichtung zum Einsetzen eines Milchschlauchstücks in eine Anschlussöffnung einer Milchsammeleinrichtung, mit
einer fest eingestellten Montageöffnung, die ausgebildet ist, das Milchschlauchstück teilweise zu umfassen und dessen Durchmesser in einer radialen Richtung zu reduzieren.

15. Montageeinrichtung nach Anspruch 14, wobei die Montageöffnung durch ein Ringsegment mit einer Aufnahmeöffnung gebildet ist, durch die das Milchschlauchstück radial in die Montageöffnung einführbar ist.

## Claims

1. Assembly device (100) for inserting into an opening a deformable tube portion (150) which is suitable for conveying foods, comprising
a holding device which surrounds the circumference of the tube portion at least in part and which is configured to reduce in a controlled manner an original diameter corresponding to the tube portion in at least a radial direction, at least when inserting the tube portion (150) into the opening (105), and
a handle (101) which is connected to the holding device.

2. Assembly device according to claim 1, wherein the holding device is configured to surround an end region of a teat cup liner at least in part.

3. Assembly device according to claim 2, wherein the holding device comprises two or more gripper jaws (103).

4. Assembly device according to any of claims 1 to 3, wherein the two or more gripper jaws (103) comprise an engagement portion for engaging in a recess of the tube portion.

5. Assembly device according to either claim 3 or claim 4, further comprising a locking device which is configured to hold the gripper jaws in an operating position for holding the tube portion.

6. Assembly device according to any of claims 1 to 5, further comprising an adjusting device (104) for guiding the holding device through an opening of a teat cup.

7. Assembly device according to either claim 1 or claim 2, wherein the holding device is configured to surround and deform the tube portion in part, in order for the diameter thereof to be reduced in the at least one radial direction and to be enlarged in a radial direction perpendicular thereto.

8. Assembly device according to claim 7, wherein the holding device comprises two gripper jaws which can be fixed in an assembly position and form a ring segment comprising a receiving opening which makes it possible to radially insert the tube portion into the ring segment.

9. Assembly device according to claim 8, wherein the two gripper jaws are adjustable in such a way that the diameter of the ring segment can be set.

10. Assembly device according to claim 9, wherein the holding device comprises two gripper jaws which are rigidly connected to the handle and form a ring segment comprising a receiving opening which makes it possible to radially insert the tube portion into the ring segment.

11. Assembly device according to any of claims 8 to 10, further comprising a guiding ridge (108) which is configured at least over part of the circumference of the ring segment.

12. Assembly device according to any of claims 8 to 11, wherein a movable slide element (109) is further provided which, when actuated, can be brought into contact with the tube portion held by the holding device.

13. Assembly device according to any of claims 1 to 12, wherein a tapering disassembly region (110) is provided which is configured to be suitable for deforming an end of the tube portion.

14. Assembly device for inserting a milk tube portion into a connection opening of a milk collection device, comprising
a non-adjustable assembly opening which is configured to surround the milk tube portion in part and to reduce the diameter thereof in a radial direction.

15. Assembly device according to claim 14, wherein the assembly opening is formed by a ring segment comprising a receiving opening, through which the milk tube portion can be radially inserted into the assembly opening.

## Revendications

1. Dispositif de montage (100) pour placer un morceau de tuyau déformable (150) destiné au transport de produits alimentaires dans une ouverture, comprenant
un dispositif de retenue entourant au moins partiellement la circonférence du morceau de tuyau, constitué de manière à réduire de manière contrôlée un diamètre original correspondant au morceau de tuyau au moins lors de l'introduction du morceau de tuyau (150) dans l'ouverture (105) dans au moins une direction radiale, et
une poignée connectée au dispositif de retenue (101).

2. Dispositif de montage selon la revendication 1, dans lequel le dispositif de retenue est constitué de manière à entourer au moins partiellement une extrémité d'un caoutchouc pour trayon.

3. Dispositif de montage selon la revendication 2, dans lequel le dispositif de retenue comporte deux mâchoires ou plus (103).

4. Dispositif de montage selon l'une des revendications 1 à 3, dans lequel les deux mâchoires ou plus (103) comportent une section de saisie pour saisir un renfoncement du morceau de tuyau.

5. Dispositif de montage selon l'une des revendications 3 ou 4, comprenant en outre un dispositif d'arrêt constitué pour maintenir les mâchoires dans une position de service pour arrêter le morceau de tuyau.

6. Dispositif de montage selon l'une des revendications 1 à 5, comprenant en outre un dispositif d'ajustement (104) pour introduire le dispositif de montage dans une ouverture d'un gobelet trayeur.

7. Dispositif de montage selon la revendication 1 ou 2, dans lequel le dispositif de retenue est constitué de manière à enserrer et à déformer partiellement le morceau de tuyau pour réduire son diamètre dans ladite au moins une direction radiale et pour augmenter son diamètre dans une direction radiale perpendiculaire à celle-ci.

8. Dispositif de montage selon la revendication 7, dans lequel le dispositif de retenue comporte deux mâchoires qui peuvent être fixées dans une position de montage et constituent un segment annulaire avec une ouverture d'admission qui permet une introduction radiale du morceau de tuyau dans le segment annulaire.

9. Dispositif de montage selon la revendication 8, dans lequel les deux mâchoires sont ajustables de manière à ajuster un diamètre du segment annulaire.

10. Dispositif de montage selon la revendication 9, dans lequel le dispositif de retenue comporte deux mâchoires qui sont connectées de manière rigide à la poignée et constituent un segment annulaire avec une ouverture d'admission qui permet une introduction radiale du morceau de tuyau dans le segment annulaire.

11. Dispositif de montage selon l'une des revendications 8 à 10, comprenant en outre un col d'introduction (108) qui est constitué au moins le long d'une partie de la circonférence du segment annulaire.

12. Dispositif de montage selon l'une des revendications 8 à 11, dans lequel est en outre pourvu un élément coulissant mobile (109) qui, lors de l'actionnement, peut être amené en contact avec le morceau de tuyau maintenu par le dispositif de retenue.

13. Dispositif de montage selon l'une des revendications 1 à 12, dans lequel est pourvue une zone de démontage conique (110) constituée de manière à pouvoir déformer une extrémité du morceau de tuyau.

14. Dispositif de montage pour introduire un morceau de tuyau transportant du lait dans une ouverture de connexion d'une installation de collecte de lait, comprenant
une ouverture de montage fixe constituée de manière à enserrer partiellement le morceau de tuyau transportant du lait et à réduire son diamètre dans une direction radiale.

15. Dispositif de montage selon la revendication 14, dans lequel l'ouverture de montage est constituée de manière à traverser un segment annulaire comportant une ouverture d'admission à travers laquelle le morceau de tuyau transportant du lait peut être introduit radialement dans l'ouverture de montage.
